Europäisches Patentamt

European Patent Office

Office européen des brevets

(19)

(11) Veröffentlichungsnummer: **0 188 798**
**B1**

(12) # EUROPÄISCHE PATENTSCHRIFT

(45) Veröffentlichungstag der Patentschrifft:
28.02.90

(21) Anmeldenummer: 85116426.9

(22) Anmeldetag: 21.12.85

(51) Int. Cl.⁵: **E 21 B 49/00, E 21 B 47/00,**
**G 01 B 5/30**

(54) Verfahren zur Montage einer Verrohrung für Messzwecke.

(30) Priorität: 24.01.85 CH 336/85

(43) Veröffentlichungstag der Anmeldung:
30.07.86 Patentblatt 86/31

(45) Bekanntmachung des Hinweises auf die Patenterteilung:
28.02.90 Patentblatt 90/09

(84) Bennante Vertragsstaaten:
AT DE FR GB

(56) Entgegenhaltungen:
DE-A-2 920 886
FR-A-2 166 582
FR-A-2 549 133
GB-A-2 084 217
US-A-3 483 745
US-A-3 686 942
US-A-4 254 832

(73) Patentinhaber: Gesellschaft zur Förderung der Industrieorientierten Forschung an den Schweizerischen Hochschulen und weiteren Institutionen
Gloriastrasse 35
CH-8092 Zürich (CH)

(72) Erfinder: Kovari, Kalman, Prof.Dr.Dipl.-Ing.ETH.
Stettbachstrasse 6
CH-8702 Zollikon (CH)
Erfinder: Amstad, Christian, Dipl.-Bauing.ETH
Birchstrasse 102
CH-8156 Oberhasli (CH)
Erfinder: Köppel, Jakob
Lärchenweg 5
CH-8116 Würenlos (CH)

(74) Vertreter: Patentanwälte Schaad, Balass & Partner
Dufourstrasse 101 Postfach
CH-8034 Zürich (CH)

EP 0 188 798 B1

2

## Beschreibung

Die Erfindung betrifft ein Verfahren zur Montage einer Verrohrung für Messzwecke in einer im zu untersuchenden Material eingebrachten Bohrung, die in regelmässigen Abständen durch eine Messsonde abzutastende Referenzbereiche aufweist, für die Ermittlung von Veränderungen in diesem Material aufgrund einer Veränderung der Relativlage zwischen zwei benachbarten Referenzbereichen, sowie eine Verrohrung zur Durchführung des Verfahrens und eine Halteeinrichtung für die Verrohrung.

Eine Verrohrung der genannten Art ist bekannt durch die US-PS-4 327 590 (CH-PS-636 698). Sie wird beispielsweise angewandt, um Bewegungen im Untergrund von Bauwerken zu ermitteln, so dass sie eine erhebliche Längenausdehnung hat, mit Abständen zwischen den Referenzbereichen von z. B. einem Meter. In unverformter Ausgangslage sollen die Referenzbereiche eine genau vorgegebene Relativlage zueinander aufweisen, da bereits sehr geringe Abweichungen von dieser Relativlage durch die Messsonde feststellbar sein sollen. Bei bekannten Verrohrungen sind deshalb die einzelnen hintereinander angeordneten Referenzbereiche durch ein verhältnismässig steifes Rohr miteinander verbunden und können auch einen Bestandteil eines solchen Rohres bilden. Für die Übertragung von Bewegungen aufgrund von Materialverschiebungen auf die Referenzbereiche der Verrohrung ist diese auf ihrer gesamten Länge in der im zu untersuchenden Material vorgesehenen Aufnahmebohrung einzementiert. In verhältnismässig weichem Material, d.h. weichem Gestein oder Boden, ist jedoch keine ausreichende Übertragung der Verschiebbewegung auf die Verrohrung gewährleistet, da sie sich in diesem Fall zu steif verhält.

Der Erfindung liegt die Aufgabe zugrunde, ein Verfahren zur Montage einer Verrohrung für Messzwecke in einer im zu untersuchenden Material eingebrachten Bohrung zu finden, das eine genaue Ausrichtung ihrer Referenzbereiche relativ zueinander ermöglicht, ohne dass hierfür eine starre Rohrverbindung zwischen den Referenzbereichen erforderlich ist. Die Lösung dieser Aufgabe erfolgt aufgrund eines Verfahrens mit den Merkmalen des Patentanspruches 1 sowie durch eine Verrohrung zur Durchführung dieses Verfahrens gemäss Patentanspruch 4 und eine Halteeinrichtung für dieses Messrohr gemäss Patentanspruch 13.

Da aufgrund der Erfindung die Rohrbereiche zwischen den Referenzbereichen der Verrohrung nicht mehr die Aufgabe erfüllen müssen, die genaue Ausgangslage der Referenzbereiche zu gewährleisten, kann deren Funktion auf die Freihaltung des Innenraumes der Verrohrung beschränkt werden, so dass nicht von der Innenwand der Bohrung abbröckelndes Material zu einer Verunreinigung der abzutastenden Referenzbereiche führt oder sogar das Einführen der Messsonde in die Verrohrung verhindert wird. Die beispielsweise als Rohrmuffe ausgebildeten Referenzbereiche können somit teleskopartig mit Rohrstücken verbunden sein, die den Abstand zwischen ihnen überbrücken.

Die Herstellung einer starren Verankerung der Referenzbereiche der Verrohrung an der Innenwand der Bohrung erfolgt vorteilhaft auf an sich bekannte Weise durch je eine Füllmanschette, die den Referenzbereich umschliesst und nach Auffüllen durch ein fliessfähiges, aushärtbares Material sich fest an die Innenwand der Bohrung anlegt.

Solche Füllmanschetten für Verrohrungen für Messzwecke sind an sich bekannt durch die US-PS-4 192 181 und 4 230 180. Diese bekannten Füllmanschetten haben jedoch die Aufgabe, bestimmte Bereiche einer Verrohrung gegeneinander abzudichten, um aus diesen Bereichen Proben zu entnehmen oder in ihnen Druck- und Temperaturmessungen vorzunehmen. Referenzbereiche für eine geometrische Vermessung sind bei diesen bekannten Verrohrungen nicht vorhanden, und die Füllmanschetten sind an einer durchlaufenden, starren Rohrkonstruktion vorgesehen.

Im folgenden wir ein Ausführungsbeispiel der Erfindung mit Bezug auf die Zeichnungen näher erläutert. Es zeigt:

Fig. 1 einen Längsschnitt eines Teiles einer Verrohrung nach Auffüllen der Füllmanschetten mit eingesetzter Halteeinrichtung,

Fig. 2 einen Teilschnitt durch die Verrohrung nach Fig. 1 im Referenzbereich in Verbindung mit der Halteeinrichtung,

Fig. 3 eine Darstellung entsprechend Fig. 2 nach Lösen der Verbindung mit der Halteeinrichtung,

Fig. 4 im Längsschnitt einen Teil der Verrohrung nach Fig. 1 in einem Referenzbereich nach Entfernen der Halteeinrichtung,

Fig. 5 einen Längsschnitt durch den Anfangs- und Endbereich der Verrohrung nach Fig. 1 nach Fertigstellung der Montage und mit eingesetzter Messsonde,

Fig. 6 eine Darstellung ähnlich der Fig. 4 mit einer zweiten Fülleitung und

Fig. 7 einen Längsschnitt durch den Anfangs- und Endbereich einer Verrohrung mit zwei Füllleitungen nach Fertigstellung der Montage.

Die Verrohrung 1 besteht aus mehreren in gleichem Abstand d montierten Messrohr-Muffen 2, die die Referenzbereiche der Verrohrung bilden und aus zwischen diesen teleskopartig eingesetzten Schutzrohrstücken 3. Die gegenseitige exakte Ausrichtung der Messrohr-Muffen 2, relativ zueinander während der Montage der Verrohrung 1, erfolgt hinsichtlich des genauen Abstandes d voneinander sowie hinsichtlich der Achsgleichheit durch eine besondere Halteeinrichtung 4.

Die Montage der Verrohrung zusammen mit

2

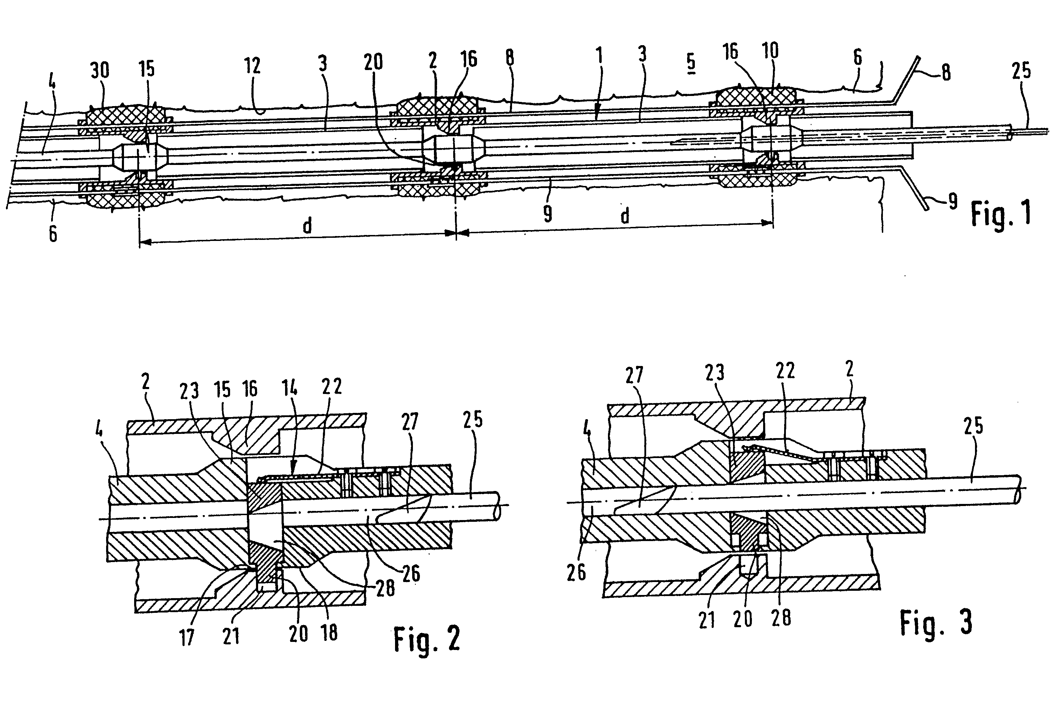

der Halteeinrichtung erfolgt schrittweise durch fortschreitendes Aneinandersetzen der Messrohr-Muffen 2 und Schutzrohrstücke 3 zusammen mit aneinanderfügbaren Stücken der Halteeinrichtung 4. Das Aneinandersetzen kann ausserhalb des im zu untersuchenden Material 5 eingebrachten Bohrloches 6 erfolgen, indem anschliessend jeweils die gebildete Einheit aus Verrohrung und Halteeinrichtung weiter in das Bohrloch hineingeschoben wird. Dabei werden gemäss dem Ausführungsbeispiel der Fig. 1, 4 und 5 auch jeweils entsprechend lange Stücke einer Fülleitung 8 und einer Rückleitung 9 an dem Messrohr montiert, die zum späteren Füllen von Füllmanschetten 10 dienen.

Damit während des Einschiebevorganges bis zur späteren Verankerung der Messrohr-Muffen 2 an der Innenwand 12 des Bohrloches 6 die Messrohr-Muffen ihre exakte Ausrichtung zueinander beibehalten, sind diese durch einen lösbaren Verklinkungsmechanismus 14, 23 starr an der Halteeinrichtung 4 gehalten. Hierfür hat die Halteeinrichtung 4 für jede Messrohr-Muffe 2 einen Zentrierkopf 15, der zwischen die in der Messrohr-Muffe vorgesehenen, nockenartigen Messanschläge 16 einschiebbar ist. Die Messanschläge 16 sind zu mehreren in Umfangsrichtung nebeneinander vorgesehenen, und ihre zylindrischen Innenflächen 17 zentrieren somit die Messrohr-Muffe an der kreiszylindrischen Umfangsfläche 18 des Zentrierkopfes 15. Die axiale Fixierung der Messrohr-Muffe 2 am Zentrierkopf 15 der Halteeinrichtung 4 erfolgt durch einen Verriegelungsbolzen 20, der in eine Querbohrung 21 in einem der Messanschläge, entsprechende Darstellung in Fig. 2, einklinkbar ist. In der eingeklinkten Position wird der Verriegelungsbolzen 20 durch den Druck einer Blattfeder 22 gehalten, die mit ihrem Ende an einem Bolzenträger 23 anliegt, der als Querschieber in den Zentrierkopf 15 geführt ist.

Für die Lösung der Verbindung zwischen der Halteeinrichtung 4 und den Messrohr-Muffen 2 ist eine Entriegelungsstange 25 vorgesehen, die in einem Längskanal 26 der Halteeinrichtung 4 geführt ist. Die Entriegelungsstange 25 hat ein nasenförmig zugespitztes Ende 27. Gelangt dieses Ende 27 beim Einschieben der Entriegelungsstange 25 in den Längskanal 26 der Halteeinrichtung 4 an den quer verschiebbaren Bolzenträger 23, dann schiebt es sich in eine sich verjüngende und in Verriegelungsposition zur Achse des Längskanals 26 quer versetzte Bohrung 28 hinein und zentriert dabei diese Bohrung zurück zur Achse des Längskanals 26 mit einer entsprechenden Verschiebung des Bolzenträgers 23 in die in Fig. 3 dargestellte Entriegelungsposition. Die sich verjüngende Bohrung 28 des Bolzenträgers ist vorzugsweise kegelstumpfförmig mit einem kleinsten Durchmesser entsprechend dem Durchmesser der Entriegelungsstange 25. Durch weiteres Einschieben der Entriegelungsstange 25 kann nach und nach jeder der Zentrierköpfe 15 der Halteeinrichtung ausgeklinkt werden, um die Halteeinrichtung nach Herstellung einer starren Verbindung der Messrohr-Muffen 2 mit der Innenwand 12 der Bohrung 6 aus der Verrohrung herauszuziehen. Es versteht sich, dass verschiedene Ausführungsformen eines Mechanismus zur Herstellung einer lösbaren Verbindung zwischen der Halteeinrichtung und den Messrohr-Muffen 2 möglich sind. Beispielsweise kann auch ein Entriegelungsschieber, entgegen der Kraft einer Zugfeder, von aussen durch ein Zugorgan einen Bolzenträger gegen den Druck einer Feder in eine Entriegelungsposition bewegen. Die Belastung des Bolzenträgers 23 durch eine Blattfeder 22, die sich in Längsrichtung der Halteeinrichtung 4 erstreckt, ist aufgrund des geringen Raumbedarfes von Vorteil, obwohl auch andere Federkonstruktionen möglich sind.

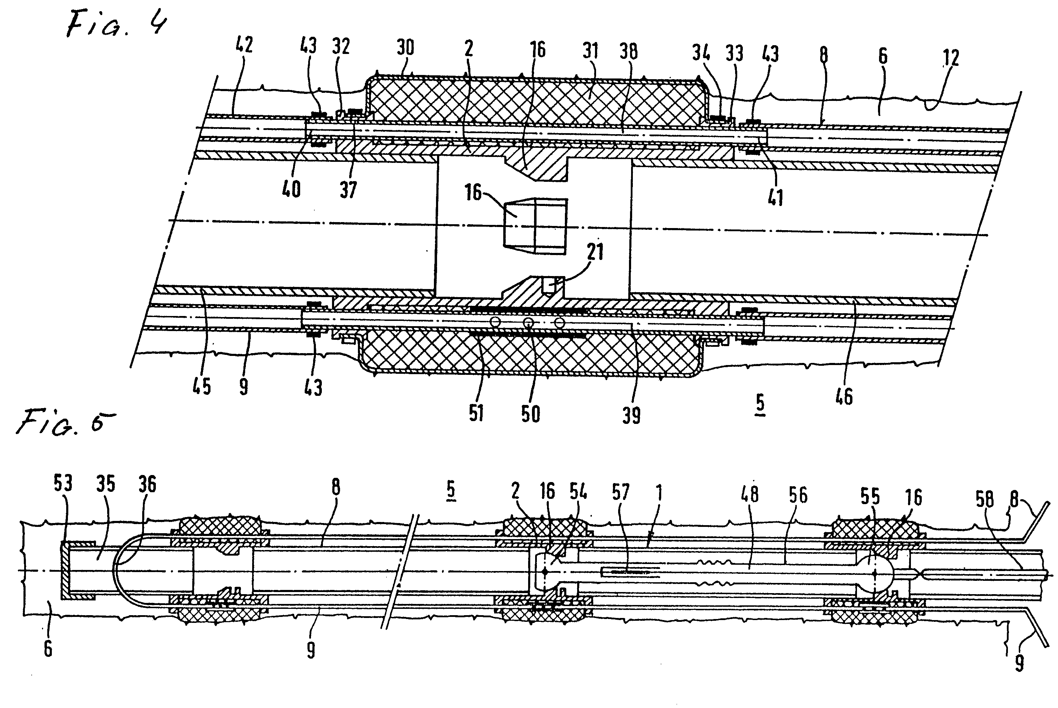

Fig. 4 zeigt einen im Vergleich zu den Fig. 1 und 5 vergrösserten Querschnitt durch einen Teil der Verrohrung in einem der Bereiche seiner Verankerung in der im Material 5 eingebrachten Aufnahmebohrung 6. Die Verankerung ist bereits fertiggestellt, da die vorbeschriebene Halteeinrichtung sich nicht mehr in der Verrohrung 1 befindet. Entsprechend ist der in die Füllmanschetten 30 eingepresste Zementmörtel 31 bereits erstarrt, so dass eine starre Verbindung zwischen der Messrohr-Muffe 2 und der Innenwand der Bohrung 6 vorhanden ist.

Die Messrohr-Muffe 2, deren für die Messung wesentlichen Teile, die an ihrer Innenwand angeformte nockenartige Messanschläge 16 sind, hat an ihren beiden Enden je einen sich radial nach aussen erstreckenden Flansch 32, 33, an dessen Aussenumfang ein Ende der Füllmanschette mittels einer Schlauchbride 34 klemmend gehalten ist.

Die Fülleitung 8 und die Rückleitung 9, die am inneren Endbereich 35 der Verrohrung entsprechend der Darstellung in Fig. 5 über ein Bogenstück 36 miteinander verbunden sind, erstrecken sich jeweils durch Bohrungen 37 in den Flanschen 32, 33 hindurch. Hierfür ist an den Messrohr-Muffen 2 für die Erleichterung der schrittweisen Montage ein Leitungsstück 38 bzw. 39 vormontiert, das sich parallel zur Aussenwand der Muffe 2 zwischen den Flanschen 32, 33 erstreckt und in axialer Richtung nach aussen von den Flanschen zur Bildung kurzer Anschlußstutzen 40, 41 absteht. Bei der Montage werden Schlauchstücke, z. B. aus weichem Kunststoff oder Gummi, jeweils auf solche Anschlussstutzen 40, 41 aufgeschoben und mittels einer Schlauchbride 43 befestigt. Die aufgeschobenen Schlauchstücke 42 überbrücken somit den Abstand zwischen benachbarten Messrohr-Muffen 2. Dabei erstrecken sie sich parallel zur Aussenwand von benachbarte Messrohr-Muffen 2 teleskopartig verbindenden Schutzrohren 45, 46.

Bei der schrittweisen Montage der Verrohrung werden die Schutzrohre 45, 46 mit ihren Enden in eine Messrohr-Muffe 2 eingeschoben, so dass sie mit ihrer Aussenwand an der Innenwand der Messrohr-Muffe entlanggleiten. Die Länge der eingeschobenen Schutzrohre 45, 46 ist ausreichend kleiner als der durch die Halteeinrichtung 4 bestimmte Abstand zwischen nockenartigen Messanschlägen 16 benachbarter Messrohr-Muffen 2, so dass verhindert wird, dass sich die Schutzrohre an diesen Messanschlägen 16 abstützen. Somit können sich die einzelnen Messrohr-Muffen 2 unbehindert durch die Teleskop-Schutzrohre 45, 46 relativ zueinander bewegen, falls eine solche Bewegung durch die zu erfassende Bewegung im umgebenden Material 5 des Bohrloches 6 den Messrohr-Muffen aufgezwungen wird. Da die Schutzrohre 45, 46 lediglich die Aufgabe haben, den Innenraum der Verrohrung für die Einführung einer Messonde 48 freizuhalten, können sie aus einem verhältnismässig flexiblen und/oder dünnwandigen Material bestehen, so dass auch bei auftretenden Querversetzungen im umgebenden Material 5 diese unverfälscht auf die Rohr-Muffen 2 übertragen werden.

Im Gegensatz zu den Schutzrohren 45, 46 und den Leitungen 8, 9 sind die Messrohr-Muffen 2 sowie die Halteeinrichtung 4 aus einem möglichst formbeständigen Material, z. B. aus Metall, herzustellen, das auch bei Temperaturänderungen keine wesentlichen Längenveränderungen aufweist. Auch eine nicht dargestellte Verbindung zwischen einzelnen Stücken der Halteeinrichtung 4, z. B. in Form einer Schraubverbindung, müssen starr ausgeführt sein, so dass die zu kalibrierenden Positionen der Messrohr-Muffen bzw. ihrer nockenartigen Messanschläge 16 stets genau eingehalten werden können.

Die Füllmanschetten 30 bestehen aus einem flexiblen Material, so dass sie sich den eventuellen Unebenheiten der Innenwand 12 des Bohrloches 6 unter dem Fülldruck des Zementmörtels 31 anpassen können. Das Material der Füllmanschetten ist beispielsweise gewebearmierter Kunststoff. Es kann jedoch vorteilhaft auch ein durchlässiges Gewebe für die Füllmanschetten 30 verwendet werden, dessen Maschenweite so gewählt ist, dass zu Beginn des Füllvorganges noch eine geringe Menge feinster Bestandteile des Mörtels hindurchdiffundieren kann und sich eine Mörtelverbindung mit der Bohrlochwand 12 ergibt. Die Füllmanschetten können entsprechend der in Fig. 4 sichtbaren Querschnittsform vorgeformt sein, d.h. ihre Verbindung mit den Flanschen 32, 33 der Messrohr-Muffe 2 einen kleineren Durchmesser aufweisen, sie können jedoch auch aus einem Schlauchmaterial bestehen mit einem Aussendurchmesser, der grösser ist als der Innendurchmesser des Bohrloches 6, so dass die Schlauchbriden 34 die Manschette an ihren beiden axial einander gegenüberliegenden Enden auf dem Aussendurchmesser der Flansche 32, 33 zusammenschliessen. Die Füllung der Füllmanschetten 30 erfolgt über die Rückleitung 9, indem sich in dem an der Messrohr-Muffe 2 vormontierten Leitungsstück 39 mindestens eine Austrittsöffnung 50 befindet. Es versteht sich, dass die zuvor beschriebenen Leitungsstücke 38, 39 sich durch die Füllmanschette 30 hindurcherstrecken, da diese aussen an den Flanschen 32, 33 befestigt ist und somit die Messrohr-Muffe 2 umschliesst. Um ein Rückströmen von Füllmaterial aus den Füllmanschetten 30 in die Rückleitung 9 hinein zu verhindern, sind die Austrittsöffnungen 50 der Rückleitung vorzugsweise mit einem Ventilmechanismus versehen, der auf einfache Weise aus einem Schlauchstück 51 aus Gummi besteht, das die Rückleitung im Bereich der Austrittsöffnung 50 eng umschliesst. Im dargestellten Beispiel sind drei solcher Austrittsöffnungen 50 in einer in Längsrichtung der Leitung verlaufenden Reihe hintereinander angeordnet. Bei geringem Überdruck in der Rückleitung 9 hebt sich das Schlauchstück von der Rückleitung ab und gibt somit die Austrittsöffnungen 50 frei. Bei Zufuhr von flüssigem Zementmörtel in die Fülleitung 8 hinein, füllen sich somit die Füllmanschetten 30 der einzelnen Messrohr-Muffen 2 beginnend vom inneren Ende des Messrohres nacheinander auf. Der Fülldruck wird bis zum Erstarren des Zementmörtels in den Füllmanschetten aufrechterhalten. Es versteht sich, dass die Austrittsöffnungen 50 auch in der Fülleitung 8 innerhalb der Manschetten 30 vorgesehen sein können, so dass sich eine Rückleitung 9 vermeiden lässt, jedoch bietet die Verwendung einer Rückleitung 9 eine grössere Sicherheit für ein vollständiges Füllen aller Füllmanschetten.

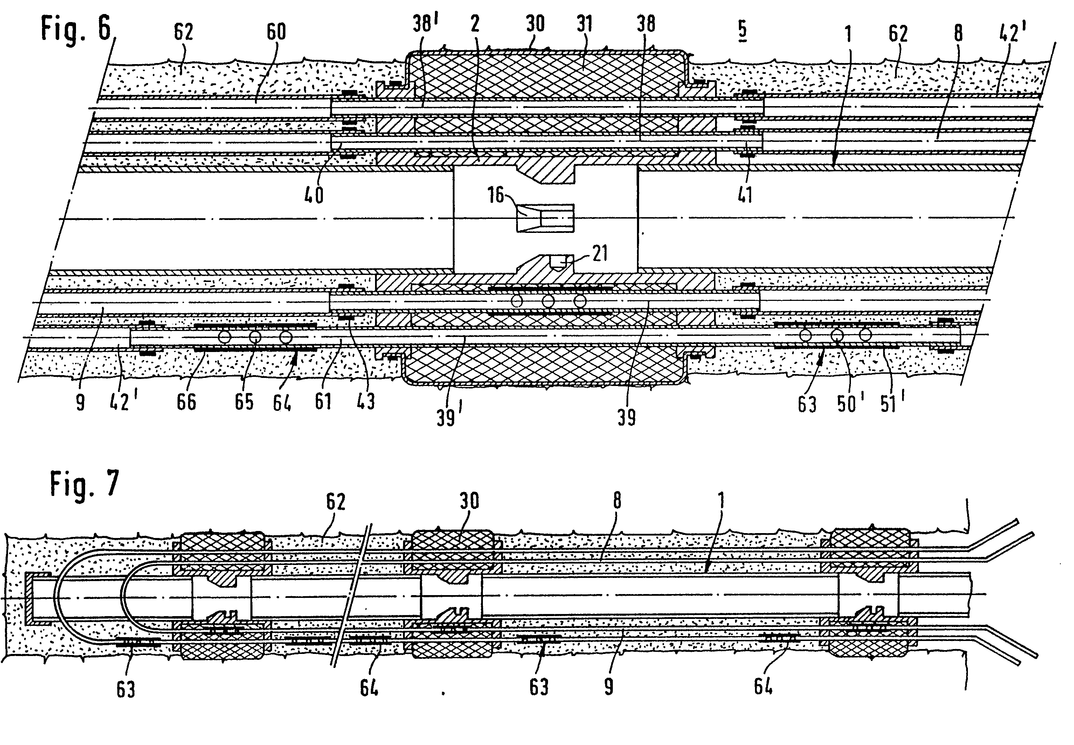

Die Fig. 6 und 7 zeigen ein Ausführungsbeispiel, bei dem 5 die Verrohrung 1 zusätzlich zu der Fülleitung 8, 9 noch eine zweite Fülleitung 60, 61 aufweist, durch die die Räume 62 zwischen jeweils zwei Füllmanschetten 30 gefüllt werden können, um die Verrohrung 1 bzw. deren Teleskopschutzrohr 45, 46 und die Fülleitungen gegen örtliche Überlastung durch das umgebende Material 5 zu schützen. Das in die Räume 62 nach dem Verfüllen der Füllmanschetten 30 einzufüllende Material 64 soll jedoch eine im Verhältnis zur Beschaffenheit des umgebenden Materials 5 geringe Festigkeit bzw. eine Elastizität aufweisen, die eine wesentliche Versteifung der Verrohrung 1 verhindert. Es eignet sich beispielsweise ebenfalls Mörtel, jedoch anderer Qualität als in den Füllmanschetten verwendet wird.

Die zweite Fülleitung hat ebenfalls einen Rückleitungsteil 61 und kann im wesentlichen gleich ausgeführt und montiert sein, wie die zuvor beschriebene Fülleitung 8, 9, mit dem Unterschied, dass sich die Füllventileinrichtung 63 im Raum 62 befindet. Entsprechend erstreckt sie sich ebenfalls durch die Füllmanschetten 30 hindurch und hat Schlauchstücke 42', die mit Leitungsstücken 38', 39' verbunden sind.

Zusätzlich zu der Füllventileinrichtung 63, die ein Löcher 50' überdeckendes, elastisches Schlauchstück 51' aufweist, ist in dem Rückleitungsteil 61 der zweiten Fülleitung im Raum 62 zwischen den Füllmanschetten 30 noch eine Entlüftungsventileinrichtung 64 vorgesehen, die ähnlich ausgeführt ist wie die Füllventileinrichtung, mit dem wesentlichen Unterschied, dass Löcher 65 in der Fülleitung bzw. deren Rückleitungsteil 61 von einer an ihr befestigten Gewebemanschette 66 überdeckt sind. Das Gewebe dieser Manschette 66 lässt Luft und/oder Wasser aus dem zu füllenden Raum 62 in den Rückleitungsteil 61 entweichen, ohne das Füllmaterial durchzulassen.

Die Fig. 5 und 7 zeigen eine Verrohrung gemäss der Erfindung einschliesslich des Verrohrungsendes 35, das durch eine Kappe 53 dicht verschlossen ist. Die Verrohrung 1 kann nahezu beliebige Länge aufweisen, d.h. mit einer grossen Anzahl von aufeinanderfolgender Messrohr-Muffen 2 versehen sein. Die Messonde 48 wird schrittweise verwendet und jeweils mit ihren beiden kugelförmigen Endköpfen 54, 55 in Messkontakt mit den nockenartigen Messanschlägen 16 von zwei benachbarten Messrohr-Muffen 2 gebracht. Beide Kugelköpfe 54, 55 sind durch ein torsionssteifes Teleskoprohr 56 miteinander verbunden. Durch die genau definierte Kontaktposition der Endköpfe 54, 55 an den Messanschlägen 16 kann die aufgetretene Längenänderung zwischen diesen Kontaktpositionen benachbarter Messrohr-Muffen aufgrund einer erfolgten Bewegung im umgebenden Material 5 mittels eines auf die Längenänderung ansprechenden Messwertgebers 57 ermittelt werden. Eine nicht dargestellte elektrische Verbindungsleitung überträgt den ermittelten Messwert entlang des Betätigungsgestänges 58 der Messonde 48 nach aussen zu einem Auswertungsgerät. Ein solches Messverfahren ist in der eingangs genannten US-Patentschrift 4 327 590 näher beschrieben.

**Patentansprüche**

1. Verfahren zur Montage einer Verrohrung für Messzwecke in einer im zu untersuchenden Material (5) eingebrachten Bohrung (6), die in regelmässigen Abständen durch eine Messonde (48) abzutastende Referenzbereiche (2, 16) aufweist, für die Ermittlung von Veränderungen in diesem Material aufgrund einer Veränderung der Relativlage zwischen zwei benachbarten Referenzbereichen (2, 16), gekennzeichnet durch Einschieben einer Verrohrung (1) zusammen mit einer von ihr umschlossenen Halteeinrichtung (4) in das Bohrloch (6), wobei die Halteeinrichtung (4) an den Referenzbereichen (2, 16) lösbar mit der Verrohrung (1) verbunden ist, Herstellen einer starren Verankerung (30) der Verrohrung (1) nur an ihren Referenzbereichen (2, 16) an der Innenwand (12) der Bohrung (6), Lösen der Verbindung zwischen der Halteeinrichtung (4) und der Verrohrung (1) nach Fertigstellung der starren Verankerung und Herausziehen der Halteeinrichtung (4) aus der Verrohrung (1).

2. Verfahren nach Anspruch 1 dadurch gekennzeichnet, dass die Begrenzung der starren Verankerung auf die Referenzbereiche (2, 16) der Verrohrung (1) durch an den Referenzbereichen aussen befestigte Füllmanschetten (30) erfolgt und dass die starre Verankerung durch Füllen der Füllmanschetten (30) unter Druck mittels eines aushärtenden, flüssigen Füllmaterials (31) hergestellt wird, wobei der Fülldruck bis zum Aushärten des Füllmaterials (31) aufrechterhalten wird.

3. Verfahren nach Anspruch 2, dadurch gekennzeichnet, dass die von der Bohrung (6), der Verrohrung (1) und einem Paar von gefüllten Füllmanschetten (30) begrenzten Räume (62) mit einem Material geringer Festigkeit verfüllt werden, so dass es die Verrohrung schützt, ohne sie wesentlich zu versteifen.

4. Verrohrung zur Durchführung des Verfahrens nach Anspruch 1 oder 2, dadurch gekennzeichnet, dass die Verrohrung (1) aus mehreren Referenzbereiche bildenden Messrohr-Muffen (2) und diese teleskopartig miteinander verbindenden Schutzrohren (3) besteht, wobei an jeder Messrohr-Muffe (2) eine Einrichtung (30) für die starre Verankerung an der Innenwand (12) eines Bohrloches (6) vorgesehen ist.

5. Verrohrung nach Anspruch 4, dadurch gekennzeichnet, dass an der Innenseite jeder Messrohr-Muffe (2) mindestens eine Verklinkungsvertiefung (21) für den Eingriff eines an der Halteeinrichtung (4) vorgesehenen Verklinkungsorganes (20) vorgesehen ist.

6. Verrohrung nach Anspruch 4 oder 5, dadurch gekennzeichnet, dass jede Messrohr-Muffe (2) durch eine Füllmanschette (30) umschlossen ist, wobei die Füllmanschetten (30) der Messrohr-Muffen (2) durch eine Fülleitung (8, 9) miteinander verbunden sind.

7. Verrohrung nach Anspruch 6, dadurch gekennzeichnet, 30 dass die Fülleitung (8) eine sich durch die Füllmanschetten (30) erstreckende Rückleitung (9) aufweist, wobei Austrittsöffnungen (50) zum Füllen der Füllmanschetten (30) in der Rückleitung (9) vorgesehen sind und eine Ventileinrichtung (51) aufweisen.

8. Verrohrung nach Anspruch 6 oder 7, dadurch gekennzeichnet, dass jede Füllmanschette am Aussenumfang an zwei Endflanschen (32, 33) der Messrohr-Muffe (2) befestigt ist, wobei sich die Fülleitung (8, 9) durch diese Endflansche (32, 33) hindurch erstreckt.

9. Verrohrung nach einem der Ansprüche 6 bis 8, dadurch gekennzeichnet, dass die Manschette aus einem Gewebe besteht, so dass ein geringer Teil des Füllmaterials (31) durch die Manschette (30) hindurch diffundiert.

10. Verrohrung nach einem der Ansprüche 6 bis 9, gekennzeichnet durch eine sich durch die Füllmanschetten (30) hindurcherstreckende zweite Fülleitung (60, 61) mit mindestens einer im Raum (62) zwischen zwei Füllmanschetten (30) vorgesehenen Füllventileinrichtung (63).

11. Verrohrung nach einem der Ansprüche 6 bis 10, dadurch gekennzeichnet, dass die Ventileinrichtungen (50, 51, 63) der Fülleitungen (8,9; 60, 61) der Verrohrung (1) jeweils aus einem elastischen, die Fülleitung umschliessenden Schlauchstück (51, 51') bestehen, das mindestens eine in der Wand der Fülleitung vorgesehene Öffnung (50, 50') überdeckt.

12. Verrohrung nach Anspruch 10, dadurch gekennzeichnet, dass in einem Rückleitungsteil (61) der zweiten Fülleitung eine Entlüftungsventileinrichtung (64) vorgesehen ist, die aus einer Gewebemanschette (66) besteht, die mindestens eine in der Wand des Rückleitungsteiles (61) vorgesehene Öffnung (65) überdeckt.

13. Halteeinrichtung für die Verrohrung nach einem der Ansprüche 4 - 12, dadurch gekennzeichnet, dass die Halte einrichtung (4) für den Eingriff in die Messrohr-Muffen (2) der Verrohrung (1) vorgesehene Zentrierbereiche (15) aufweist, in denen Mittel (20, 23) für die Herstellung einer lösbaren, formschlüssigen Verbindung mit einer Messrohr-Muffe (2) vorhanden sind.

14. Halteeinrichtung nach Anspruch 13, dadurch gekennzeichnet, dass die Mittel für die Herstellung einer formschlüssigen Verbindung mit einer Messrohr-Muffe mindestens einen durch eine Feder (22) belasteten Verriegelungskörper (20, 23) aufweisen, der entgegen der Kraft der Feder (22) durch ein Betätigungsorgan (25) vom äusseren Ende der Halteeinrichtung (4) aus in eine Entriegelungsposition bewegbar ist.

15. Halteeinrichtung nach Anspruch 14, dadurch gekennzeichnet, dass das Betätigungsorgan (25) eine in einem Längskanal (26) der Halteeinrichtung (4) verschiebbare Entriegelungsstange (25) ist, wobei der Verriegelungskörper (23) querverschiebbar in dem Zentrierbereich (15) der Halteeinrichtung (4) geführt ist und eine Öffnung (28) für die Einführung der Entriegelungsstange (25) aufweist, an der sich eine im Winkel zur Längsachse der Entriegelungsstange (25) verlaufende Steuerfläche befindet.

16. Halteeinrichtung nach Anspruch 15, dadurch gekennzeichnet, dass die im Winkel verlaufende Steuerfläche an der Öffnung (28) des Verriegelungskörpers Teil einer kegelstumpfförmigen Begrenzungsfläche der Öffnung (28) ist.

**Claims**

1. A process for the assembly of pipework for measuring purposes in a borehole (6) in the material to be investigated (5), which has reference areas (2, 16) at uniform distances which can be sensed by means of a measuring probe (48), for the determination of changes in this material on the basis of a change in the relative position of two adjacent reference areas (2, 16), characterised by insertion of pipework (1) together with a holding device (4) surrounded by it into the borehole (6), wherein the holding device (4) is detachably connected to the pipework (1) at the reference areas (2, 16); provision of a rigid anchoring (30) of the pipework (1) only at its reference areas (2, 16) on the inner wall (12) of the borehole (6); releasing of the connection between the holding device (4) and the pipework (1) after completion of the rigid anchoring and withdrawal of the holding device (4) from the pipework (1).

2. A process according to claim 1, characterised in that the limitation of the rigid anchoring to the reference areas (2, 16) of the pipework (1) occurs through filling collars (30) fixed to the outside of the reference areas, and in that the rigid anchoring is produced by filling the filling collars (30) under pressure with a hardening fluid filler material (31), wherein the filling pressure is maintained until the filler material (31) has hardened.

3. A process according to claim 2, characterised in that the spaces (62), surrounded by the borehole (6), the pipework (1) and a pair of filled filling collars (30), are filled with a material of lower solidity so that it protects the pipework without making it particularly rigid.

4. Pipework for carrying out the process of claim 1 or 2, characterised in that the pipework (1) consists of several measuring conduit couplers (2) forming reference areas, and protection tubes (3) connecting these telescopically with each other, wherein at each measuring conduit coupler (2) a device (30) is provided for the rigid anchoring to the inner wall (12) of a borehole (6).

5. Pipework according to claim 4, characterised in that on the inside of each measuring conduit coupler (2) at least one interlocking recess (21) is provided for engagement by an interlocking member (20) provided on the holding device (4).

6. Pipework according to claim 4 or 5, characterised in that each measuring conduit coupler (2) is surrounded by a filling collar (30) whereby the filling collars (30) of the measuring conduit couplers (2) are connected to each other by a filling pipe (8, 9).

7. Pipework according to claim 6, characterised in that the filling pipe (8) has a return pipe (9) extending through the filling collars (30), whereby outlet apertures (50) are provided for filling the filling collars (30) in the return pipe (9) which outlets have a valve device (51).

8. Pipework according to claim 6 or 7, characterised in that each filling collar at its external periphery is fastened to two end flanges (32, 33) of the measuring conduit coupler (2) whereby the filling pipe (8, 9) extends through these end flanges (32, 33).

9. Pipework according to any of claims 6 to 8, characterised in that the collar consists of a woven mass so that a lower proportion of the filling

EP 0 188 798 B1

11

material (31) diffuses through the collar (30).

10. Pipework according to any of claims 6 to 9, characterised by a second filling pipe (60, 61) extending through the filling collars (30) with at least one filling valve device (63) in the space (62) provided between two filling collars (30).

11. Pipework according to any of claims 6 to 10, characterised in that the valve devices (50, 51, 63) of the filling pipes (8, 9; 60, 61) of the pipework (1) consist respectively of a flexible hose piece (51, 51') surrounding the filling pipe, which overlaps at least one opening (50, 50') provided in the wall of the filling pipe.

12. Pipework according to claim 10, characterised in that in one return pipe part (61) of the second filling pipe an air-escape valve device (64) is provided which consists of a woven collar (66) which overlaps at least one opening (65) in the wall of the return pipe part (61).

13. A holding device for pipework according to any of claims 4 - 12, characterised in that the holding device (4) has centering areas (15) for engagement of the pipework (1) in the measuring conduit couplers (2), in which means (20, 33) are provided for the production of a detachable positive connection with a measuring conduit coupler (2).

14. A holding device according to Claim 13, characterised in that the means for the production of a positive connection with a measuring conduit coupler have at least one locking member (20, 23) loaded by a spring (22) which is movable against the force of the spring (22) by an operating member (25) out of the external end of the holding device (4) into an unlocking position.

15. A holding device according to claim 14, characterised in that the operating member (25) is an unlocking bar (25) movable in a longitudinal channel (26) in the holding device (4), whereby the locking member (23) is movable transversely in the centering area (15) of the holding device (4) and has an opening (28) for the insertion of the unlocking bar (25) where a control surface is located at an angle to the longitudinal axis of the unlocking bar (25).

16. A holding device according to claim 15, characterised in that the angled control surface at the opening (28) of the locking member is part of a delimiting surface of the opening (28) in the shape of a truncated cone.

**Revendications**

1. Procédé de montage d'un tubage pour l'exécution de mesures dans un trou de sondage (6), percé dans le matériau (5) à examiner et comportant, à des distances régulières, des zones de

12

référence (2, 16) devant être explorées par une sonde de mesure (48), pour la détermination de variations dans ce matériau sur la base d'une modification de la position relative entre deux zones de référence voisines (2, 16), caractérisé par l'insertion d'un tubage (1) conjointement avec un dispositif de retenue (4) entouré par le tubage, dans le trou de sondage (6), le dispositif de retenue (4) étant relié de façon amovible au tubage (1) au niveau des zones de référence (2, 16), la réalisation d'un ancrage rigide (30) du tubage (1), raccordant ce dernier, uniquement au niveau de ces zones de référence (2, 16), à la paroi intérieure (12) du tube de sondage (6), la suppression de la liaison entre le dispositif de retenue (4) et le tubage (1) après l'établissement de l'ancrage rigide, et le retrait du dispositif de retenue (4) hors du tubage (1).

2. Procédé selon la revendication 1, caractérisé en ce que la limitation de l'ancrage rigide aux zones de référence (2, 16) du tubage (1) est réalisée au moyen de manchettes de remplissage (30) fixées extérieurement sur les zones de référence, et que l'ancrage rigide est établi par remplissage des manchettes de remplissage (30) sous l'action d'une pression au moyen d'un matériau de remplissage liquide durcissable (31), la pression de remplissage étant maintenue jusqu'au durcissement du matériau de remplissage (31).

3. Procédé selon la revendication 2, caractérisé en ce qu'on remplit les espaces (62) délimités par le tube de sondage (6), le tubage (1) et un couple de manchettes de remplissage remplies (30), avec un matériau possédant une faible résistance mécanique, de sorte que ce matériau protège le tubage, sans le rigidifier de façon importante.

4. Tubage pour la mise en oeuvre du procédé selon la revendication 1 ou 2, caractérisé en ce que le tubage (1) est constitué par plusieurs manchons tubulaires de mesure (2), constituant plusieurs zones de référence, et par des tubes de protection (3) reliant entre eux de façon télescopique ces manchons, un dispositif (30) servant à réaliser l'ancrage rigide sur la paroi intérieure (12), d'un trou de sondage (6) étant prévu au niveau de chaque manchon tubulaire de mesure (2).

5. Tubage selon la revendication 4, caractérisé en ce que sur la face inférieure de chaque manchon tubulaire de mesure (2), il est prévu au moins un renfoncement d'encliquetage (21) pour l'accrochage d'un organe d'encliquetage (20) prévu sur le dispositif de retenue (4).

6. Tubage selon la revendication 4 ou 5, caractérisé en ce que chaque manchon tubulaire de mesure (2) est entouré par une manchette de remplissage, les manchettes de remplissage (30) des manchons tubulaires de mesure (2) étant reliées entre elles par une canalisation de remplissage (8, 9).

7

7. Tubage selon la revendication 6, caractérisé en ce que la canalisation de remplissage (8) comporte une canalisation de retour (9) qui traverse les manchettes de remplissage (30), des ouvertures de sortie (50) étant prévues pour le remplissage des manchettes de remplissage (30) dans la canalisation de retour (9) et comportant un dispositif formant soupape (51).

8. Tubage selon la revendication 6 ou 7, caractérisé en ce que chaque manchette de remplissage est fixée, au niveau de son pourtour extérieur, à deux brides d'extrémité (32, 33) du manchon tubulaire de mesure (2), la canalisation de remplissage (8, 9) traversant ces brides d'extrémité (32, 33).

9. Tubage selon l'une des revendications 6 à 8, caractérisé en ce que la manchette est réalisée en un tissu de sorte qu'une faible partie du matériau de remplissage (31) diffuse à travers la manchette (30).

10. Tubage selon l'une des revendications 6 à 9, caractérisé par une seconde canalisation de remplissage (60, 61), qui traverse les manchettes de remplissage (30) et comporte au moins un dispositif formant soupape de remplissage (63) prévu dans l'espace (62) situé entre deux manchettes de remplissage (30).

11. Tubage suivant l'une des revendications 6 à 10, caractérisé en ce que les dispositifs formant soupapes (50, 51, 63) des canalisations de remplissage (8, 9; 60, 61) du tubage (1) sont constitués respectivement par un élément de tuyau flexible élastique (51, 51'), qui entoure la canalisation de remplissage et recouvre au moins une ouverture (50, 50') prévue dans la paroi de la canalisation de remplissage.

12. Tubage selon la revendication 10, caractérisé en ce que dans une partie (61) formant canalisation de retour de la seconde canalisation de remplissage il est prévu un dispositif formant soupape de désaération (64), constitué par une manchette en tissu (66), qui recouvre au moins une ouverture (65) ménagée dans la paroi de l'élément (61) formant canalisation de retour.

13. Dispositif de retenue pour le tubage selon l'une des revendications 4 - 12, caractérisé en ce que le dispositif de retenue (15) comporte des zones de centrage (15), qui sont destinées à s'accrocher dans les manchons tubulaires de mesure (2) du tubage (1) et dans lesquels des moyens (20, 23) sont prévus pour l'établissement d'une liaison amovible, par formes complémentaires, avec un manchon tubulaire de mesure (2).

14. Dispositif de retenue selon la revendication 13, caractérisé en ce que les moyens servant à établir une liaison par formes complémentaires avec un manchon tubulaire de mesure comportent au moins un corps de verrouillage (20, 23), qui est chargé par un ressort (22) et peut être déplacé, à l'encontre de la force du ressort (22), par un organe d'actionnement (25), depuis l'extrémité extérieure du dispositif de retenue (4), jusque dans une position déverrouillée.

15. Dispositif de retenue selon la revendication 14, caractérisé en ce que l'organe d'actionnement (25) est une barre de verrouillage (25) pouvant être déplacée dans un canal longitudinal (26) du dispositif de retenue (4), le corps de verrouillage (23) étant guidé de manière à être déplaçable transversalement dans la zone de centrage (15) du dispositif de retenue (4) et comportant une ouverture (28) permettant l'introduction de la barre de déverrouillage (25), sur laquelle est située une surface de commande faisant un angle par rapport à l'axe longitudinal de la barre de déverrouillage (25).

16. Dispositif de retenue selon la revendication 15, caractérisé en ce que la surface de commande oblique prévue au niveau de l'ouverture (28) du corps de verrouillage, fait partie d'une surface limite tronconique de l'ouverture (28).

Fig. 1

Fig. 2

Fig. 3

Fig. 4

Fig. 5

EP 0 188 798 B1

Fig. 6

Fig. 7

EP 0 188 798 B1